# EUROPÄISCHE PATENTANMELDUNG

(11) **EP 1 369 340 A2**
(43) Veröffentlichungstag der Anmeldung: **10.12.2003**
(21) Anmeldenummer: 03002393.1
(22) Anmeldetag: 04.02.2003
(51) Int. Cl.: B62D 25/06, B60R 13/02, B62D 65/14

(54) **Dachmodul für ein Fahrzeug**

(30) Priorität: 05.06.2002 DE 10224970
(71) Anmelder: Webasto Vehicle Systems International GmbH, 82131 Stockdorf (DE)
(72) Erfinder: Rudolf, Thomas, 82229 Hechendorf (DE)
(74) Vertreter: Bedenbecker, Markus

(57) **Zusammenfassung**

Die vorliegende Erfindung betrifft ein Dachmodul für ein Fahrzeug, die mit einer Außenschale (12), die von oben in einer Fahrzeugkarosserieöffnung montierbar ist, und einem Himmel versehen ist, der einen ersten Abschnitt (22), einen zweiten Abschnitt (24) und einen zwischen dem ersten und dem zweiten Abschnitt liegenden mittleren Abschnitt (20) umfasst, wobei der mittlere Abschnitt vor der Montage des Dachmoduls fest an der Unterseite der Außenschale angebracht ist, wobei der erste und der zweite Abschnitt jeweils einen zentralen Bereich und beiderseits des zentralen Bereichs jeweils einen Randbereich (30,32) umfassen, der bezüglich des zentralen Bereichs nach unten klappbar ist, und wobei der erste und der zweite Abschnitt für den Durchtritt durch die Karosserieöffnung bezüglich des mittleren Abschnitts nach unten klappbar sind.

## Beschreibung

Die vorliegende Erfindung betrifft ein Dachmodul für ein Fahrzeug, das von oben in einer Fahrzeugkarosserieöffnung montierbar ist und eine Außenschale und einen unten an der Außenschale befestigten Himmel umfasst.

Aus der EP 0 964 814 B1 ist ein Dachmodul bekannt, welches eine Metallaußenhaut und eine sandwichartig damit verbundene Innenschale aus einem Schaumkunststoff aufweist, die auf ihrer von der Außenhaut abgewandten Seite mit einem textilen oder folienartigen Bezugsmaterial beschichtet ist, welches den Dachhimmel bildet. Im Randbereich ist die Schaumkunststoff-Innenschale aufgeteilt, so dass der untere Teil für die Montage des Dachmoduls in einem Karosserierahmen mittels Einsetzen von oben nach unten weggeklappt werden kann und nach dem Einsetzen des Dachmoduls in den Karosserierahmen von unten wieder an dem Karosserierahmen bzw. Seitenholm befestigt werden kann. Das nach-unten-Klappen der Randbereiche der Schaumkunststoff-Innenschale erfolgt unter partieller Faltung in den Eckbereichen, wobei die Randbereiche des Himmels ohne jegliche Aussparungen ausgebildet sind. Nachteilig dabei ist, dass sich bei dieser Art der Faltung in den Eckbereichen viel Material staut, wodurch die Gefahr einer Abzeichnung steigt und eine kontrollierte Faltung erschwert wird.

Ein weiteres Dachmodul ist aus der FR 2 529 844 A1 bekannt, welches ähnlich zu dem oben beschriebenen Dachmodul ist, jedoch im Gegensatz zu diesem vollständig ausgeschnittene Eckbereiche aufweist, was Designprobleme mit sich bringt.

Es ist Aufgabe der vorliegenden Erfindung, ein Dachmodul für ein Fahrzeugdach zu schaffen, welches von oben in die Fahrzeugkarosserie eingesetzt werden kann und an welchem der Dachhimmel bereits vormontiert ist, wobei das Abklappen des Himmels bei der Dachmodulmontage möglichst prozesssicher und beschädigungsfrei erfolgen soll und dennoch ein ansprechendes Design erzielt werden kann.

Diese Aufgabe wird erfindungsgemäß gelöst durch ein Dachmodul gemäß Anspruch 1. Bei dieser Lösung ist vorteilhaft, dass eine Materialstauung in den Eckbereichen des Himmels bei der Montage des Dachmoduls an der Fahrzeugkarosserie und damit Abzeichnungen und Prozessunsicherheiten vermieden werden können, indem der Himmel nur an einem mittleren Bereich fest an der Außenschale befestigt ist, wobei der erste und der zweite Bereich des Himmels bezüglich des befestigten mittleren Bereichs nach unten abklappbar sind und wobei ferner die seitlichen Randbereiche des ersten und des zweiten Himmelbereichs jeweils nach unten abklappbar sind.

Bei einer bevorzugten Ausgestaltung der Erfindung sind der erste und der zweite Abschnitt bezüglich der Fahrzeuglängsrichtung jeweils seitlich rechts bzw. links von dem mittleren Abschnitt angeordnet, wobei die Randbereiche des ersten und des zweiten Abschnitts dann bezüglich der Fahrzeuglängsrichtung am vorderen bzw. hinteren Ende des ersten bzw. des zweiten Abschnitts angeordnet sind.

Dabei ist einerseits vorteilhaft, dass in den vorderen Bereichen des Himmels, in welchen üblicherweise aufgrund des Vorsehens von Funktionselementen wie Sonnenblenden und ähnlichem eine starke plastische Verformung des Himmels erforderlich ist, keine Faltung durch diesen Bereich hindurch erforderlich ist. Statt dessen kann die jeweilige Faltlinie zwischen dem vorderen Randbereich und dem zentralen Bereich des ersten bzw. zweiten Abschnitts so gelegt werden, dass die entlang der Sonnenblenden erfolgt, wodurch die Faltung erleichtert wird und die Materialbeanspruchung verringert wird. Auf diese Weise kann die Faltung der Topologie des Himmels in zweckmäßiger Weise angepasst werden. Ferner kann der mittlere Abschnitt, da er in Fahrzeuglängsrichtung verläuft, als durchgehende Mittelkonsole gestaltet werden, wobei die Faltlinien dann entlang der Begrenzung dieser Mittelkonsole verlaufen können, wodurch sich eine etwaige Abzeichnung der Faltlinien gut verbergen lässt.

Ferner ist es bei dieser Lösung auch möglich, den vorderen und den hinteren Randbereich des mittleren Abschnitts bezüglich des ersten und des zweiten Abschnitts auszusparen, wobei in dem ausgesparten Bereich dann ohnehin üblicherweise vorhandene Funktionselemente untergebracht werden können. Der vordere Randbereich kann dabei beispielsweise von einer Bedienkonsole für ein Dachsystem mit integrierter Innenraumbeleuchtung ersetzt werden, während der hintere Randbereich durch eine dritte Bremsleuchte und eine zusätzliche Innenraumbeleuchtung ersetzt werden kann.

Eine alternative Ausgestaltung der Erfindung besteht darin, dass der erste und der zweite Abschnitt bezüglich der Fahrzeuglängsrichtung vor bzw. hinter dem mittleren Abschnitt liegen, wobei die Randbereiche des ersten und des zweiten Abschnitts dann seitlich bezüglich des jeweiligen zentralen Bereichs liegen.

Weitere bevorzugte Ausgestaltungen der Erfindung ergeben sich aus den Unteransprüchen.

Im folgenden wird die Erfindung anhand der beigefügten Zeichnungen beispielhaft näher erläutert. Es zeigen:
Fig. 1 eine perspektivische, von unten gesehene Ansicht einer ersten Ausführungsform eines erfindungsgemäßen Dachmoduls vor der Montage an einer Fahrzeugkarosserie;
Fig. 2 eine von oben gesehene perspektivische Ansicht des Dachmoduls von Fig. 1 während der Montage an einer Fahrzeugkarosserie;
Fig. 3 eine von unten gesehene perspektivische Ansicht des Himmels nach Abschluss der Montage des Dachmoduls;
Fig. 4 ist eine Ansicht ähnlich zu Fig. 1, wobei jedoch eine zweite Ausführungsform des Himmels eines erfindungsgemäßen Dachmoduls gezeigt ist; und
Fig. 5 eine Ansicht des Himmels von Fig. 4 von unten, wobei der Himmel im vollständig entfalteten Zustand gezeigt ist.

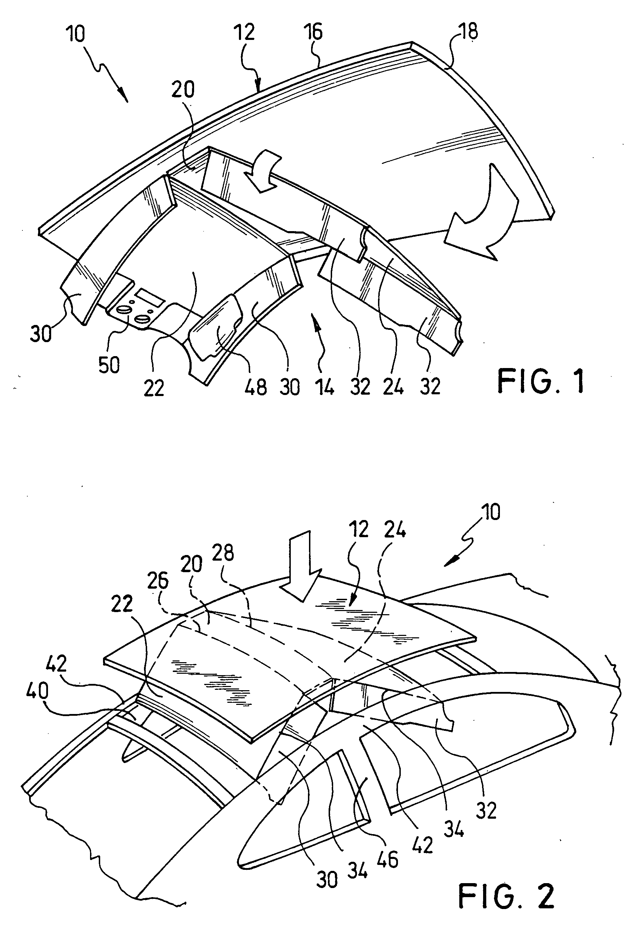

In Fig. 1 ist ein Dachmodul 10 gezeigt, welches eine feste Außenschale 12 und einen Himmel 14 aufweist. Die Außenschale 12 umfasst vorzugsweise eine Dachhaut 16, die beispielsweise von einer Kunststofffolie oder einem Aluminium- oder coil-coated-Stahlblech gebildet wird und mit einer Trägerstruktur 18, die vorzugsweise von einer Rahmenstruktur aus Papier, Kunststoff oder Metall gebildet wird und beidseitig mit PUgetränkten Glasfasermatten stabilisiert ist, hinterpresst ist.

An der Unterseite der Außenschale 12 ist der Himmel 14 in einem streifenartig ausgebildeten mittleren Abschnitt 20, der in Dachquerrichtung verläuft, befestigt. Der mittlere Abschnitt 20 ist dabei vorzugsweise so ausgebildet, dass er im Bereich der B-Säule der Fahrzeugkarosserie zu liegen kommt. Der vordere Abschnitt 22 und der hintere Abschnitt 24 des Himmels 14 können bezüglich des mittleren Abschnitts 20 nach unten geklappt werden, wobei dies entlang von Faltlinien 26 bzw. 28 erfolgt (die Klappbewegung des hinteren Himmelabschnitts 24 ist in Fig. 1 mit einem großen Pfeil angedeutet). Die seitlichen Randbereiche 30 des vorderen Himmelabschnitts 22 sowie die seitlichen Randbereiche 32 des hinteren Himmelabschnitts 24 sind bezüglich des vorderen Abschnitts 22 bzw. des hinteren Abschnitts 24 nach unten klappbar, wobei dies entlang von Faltlinien 34 erfolgt (in Fig. 1 is diese Abklappbewegung mit einem kleinen Pfeil angedeutet).

Vorzugsweise ist die Fläche des vorderen Abschnitts 22 und des hinteren Abschnitts 24 jeweils größer als die Fläche des mittleren Abschnitts 20, wobei der vordere Abschnitt 22 und der hintere Abschnitt 24 vollständig unterhalb der Außenschale 12 liegen.

Im seitlichen Randbereich des mittleren Abschnitts 20 ist der Himmel 14 so weit ausgeschnitten bzw. ausgespart, dass beim Abklappen des vorderen Abschnitts 22 und des hinteren Abschnitts 24 bei gleichzeitigem Abklappen der Randbereiche 30 und 32 keine Kollision der abgeklappten Randbereiche 30 und 32 erfolgt bzw. keine zusätzliche Faltung in diesem Bereich erforderlich ist. Zweckmäßigerweise ist dabei der seitliche Rand des mittleren Abschnitts 20 in etwa die Verlängerung der Faltlinien 34.

Alternativ könnte der mittlere Abschnitt 20 ähnlich wie der vordere Abschnitt 22 und der hintere Abschnitt 24 seitlich mit je einem abklappbaren Randbereich versehen sein, der jedoch von den benachbarten Randbereichen 30 bzw. 32 getrennt wäre, um sich beim Abklappen des vorderen Abschnitts 22 und der hinteren Abschnitts 24 bezüglich des mittleren Abschnitts 20 vor oder hinter den entsprechenden benachbarten Randbereich 30 bzw. 32 zu schieben.

In Fig. 2 ist gezeigt, wie das Dachmodul 10 ausgehend von der in Fig. 1 gezeigten Stellung mit abgeklapptem Himmel in eine Karosserieöffnung 40 eines Kraftfahrzeugs von oben eingesetzt wird. Der Himmel 14 kann dabei in der abgeklappten Stellung gemäß Fig. 1 und 2 durch die Karosserieöffnung 40 hindurch treten. Die Karosserieöffnung 40 wird seitlich von den Seitenholmen 42 des Fahrzeugs und vom und hinten von Querstreben im Bereich der Frontscheibe bzw. Heckscheibe begrenzt. Die feste Außenschale 12 wird an dem Rand der Karosserieöffnung 40 befestigt, vorzugsweise durch Einkleben.

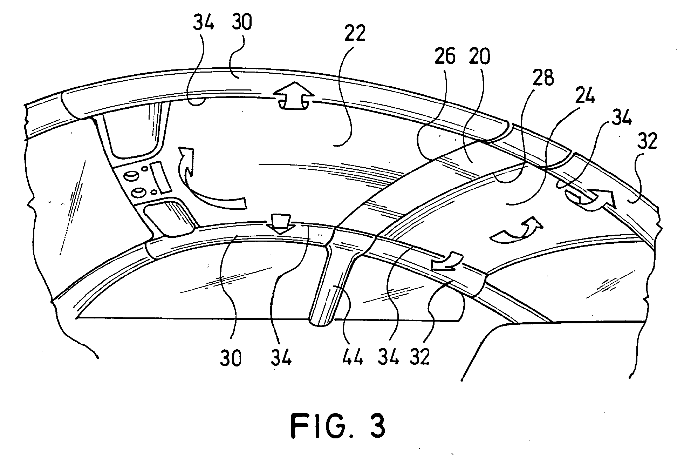

Nach Abschluss der Anbringung der Außenschale 12 an der Fahrzeugkarosserie werden die abgeklappten Himmelabschnitte 22 und 24 sowie die Randbereiche 30 und 32 wieder nach oben geklappt (wie dies in Fig.3 mit Pfeilen angedeutet ist), um sich von unten an die Außenschale 12 bzw. im Randbereich von unten an Karosserieelemente, wie beispielsweise die Seitenholme 42, anzulegen (der vordere Abschnitt 22 und der hintere Abschnitt 24 legen sich jedoch größtenteils von unten an die Außenschale 12 an)

Die Faltlinien 26, 28 und 34 sind vorzugsweise so angeordnet, dass sie sich nach der Montage des Dachmoduls 10 in das Fahrzeuginnenraumdesign möglichst gut einfügen. Insbesondere sind die Faltlinien 26 und 28 vorzugsweise so gewählt, dass sie, wie in Fig. 3 ersichtlich, den Abmessungen der Verkleidung 44 der B-Säule 46 entsprechen. Die B-Säulenverkleidung 44 ist dabei so nach oben verlängert, dass sie an dem jeweiligen seitlichen Rand des mittleren Himmelabschnitts 20 anliegt und somit den ausgeschnittenen Seitenbereich im Bereich des mittleren Abschnitts 20 ersetzt.

Der beschriebene Falthimmel 14 ist insofern vorteilhaft, als jeweils nur einfache lineare Faltungen entlang der Faltungslinien 26, 28 und 34 auftreten, wodurch eine hohe Prozesssicherheit erzielt wird, wobei dennoch ein ansprechender ästhetischer Eindruck des Fahrzeuginnenraums nach der Dachmodulmontage erzielt werden kann.

In den Himmel 14 sind bereits vor der Dachmodulmontage Funktionselemente integriert, wie beispielsweise Sonnenblenden 48 oder Beleuchtungselemente 50 (siehe Fig. 1).

Als Himmelmaterialien kommen beispielsweise PET, PU-RIM oder Glasutech in Frage.

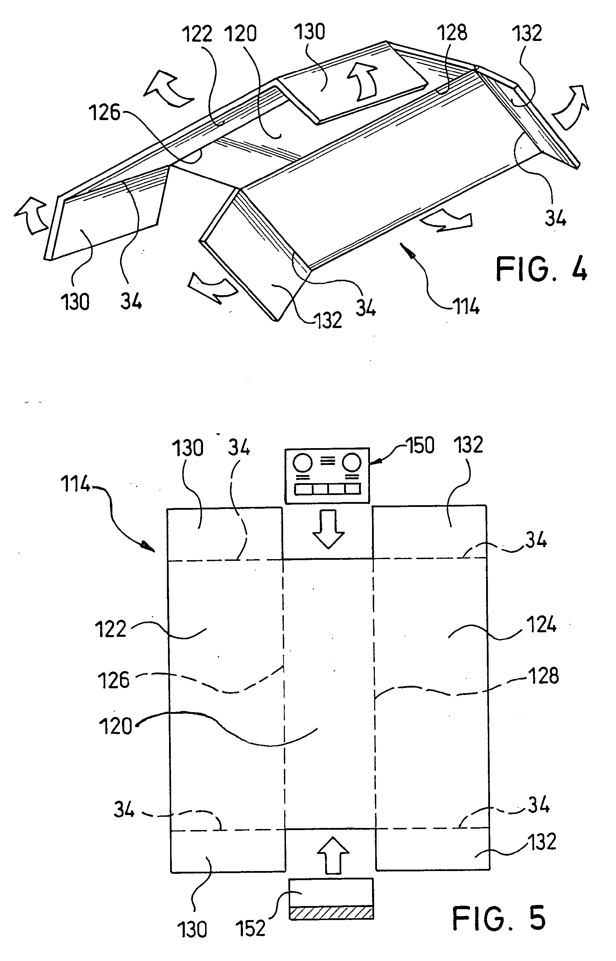

Die in den Fig. 4 und 5 gezeigte Ausführungsform eines Himmels 114 unterscheidet sich von der Ausführungsform des Himmels 14 gemäß den Fig. 1 bis 3 im wesentlichen dadurch, dass die Anordnung der Faltlinien des Himmels 114 bezüglich derjenigen des Himmels 14 von Fig. 1 bis 3 um 90° gedreht ist, so dass der mittlere Himmelabschnitt 120 statt in Fahrzeugquerrichtung in Fahrzeuglängsrichtung verläuft und die Abschnitte 22 und 24 nun jeweils seitlich, d.h. rechts bzw. links des mittleren Abschnitts 120 liegen und mit den Bezugszeichen 122 bzw. 124 bezeichnet sind. Die Randbereiche 130 bzw. 132 der seitlichen Abschnitte 122 und 124 bilden nun jeweils das vordere Ende bzw. das hintere Ende der seitlichen Abschnitte 122 bzw. 124. Entsprechend sind auch die Faltlinien 126, 128 und 134 um 90° im Vergleich zu der Ausführungsform gemäß Fig. 1 bis 3 gedreht.

Die ausgeschnittenen Randbereiche des mittleren Abschnitts 120 liegen nun nicht, wie in Fig. 1 bis 3, seitlich, sondern am vorderen bzw. hinteren Ende des mittleren Abschnitts 120. Dadurch kann er vordere ausgesparte Bereich im montierten Zustand des Dachmoduls von einer vorderen Bedienkonsole 150 und der hintere ausgesparte Randbereich von einem Element 152 ausgefüllt werden, welches beispielsweise eine Innenraumbeleuchtung und eine Zusatzbremsleuchte umfasst. Die Bedienkonsole 150 kann beispielsweise eine Innenraumbeleuchtung sowie ein Bedienfeld für ein öffnungsfähiges Dachsystem umfassen. Auf diese Weise wird eine ästhetisch plausible Ergänzung der ausgesparten Bereiche im montierten Zustand erzielt.

Die Faltung des Himmels 114 bei der Montage des Dachmoduls an der Fahrzeugkarosserie erfolgt in analoger Weise wie bei der Ausführungsform gemäß Fig. 1 bis 3. In Fig. 4 ist die Bewegung der einzelnen Himmelsegmente nach dem Einsetzen des Dachmoduls in die Fahrzeugkarosserie zum Erreichen der Endposition gemäß Fig. 3 mit Pfeilen angedeutet.

Die Ausführungsform gemäß Fig. 4 und 5 weist einige Vorteile gegenüber der Ausführungsform gemäß Fig. 1 bis 3 auf. So erscheint beispielsweise die Ergänzung des ausgeschnittenen vorderen bzw. hinteren Randbereichs des mittleren Abschnitts 120 durch die Bedienkonsole 150 bzw. das Element 152 ästhetisch besonders plausibel. Ferner ist die Abmessung dieser ausgeschnittenen Randbereiche des mittleren Abschnitts 120 in der Fahrzeugquerrichtung relativ groß, wodurch das Problem einer Überlappung der beiden gegenüberliegenden Randbereiche 130 und 132 während der Dachmodulmontage entschärft wird. Dadurch, dass die Faltlinien 34 im vorderen Bereich des Himmels 114, in welchem aufgrund des Vorsehens von Funktionselementen, wie beispielsweise von Sonnenblenden, üblicherweise eine starke plastische Verformung des Himmels 114 vorliegt, in Dachquerrichtung verlaufen, können diese aus solchen Bereichen mit starker plastischer Verformung wegverlegt werden, wobei eine Faltung quer entlang der Sonnenblenden erzielt werden kann, wodurch die Faltlinien an die zweckmäßige Topologie des Himmels 114 angepasst werden können.

Außerdem ist auch die Tatsache, dass bei der Ausführungsform gemäß Fig .4 und 5 der mittlere Abschnitt in Dachlängsrichtung verläuft, in ästhetischer Hinsicht günstig, das es gegenwärtig bei der Innenraumgestaltung einen Trend zur durchgehenden Mittelkonsole, in der viele Funktionen untergebracht werden können, gibt. Die Faltlinien 126 und 128 nehmen diesen Aspekt dann formal auf, wobei sich eine etwaige Abzeichnung der Faltlinien entlang einer ausgeformten Mittelkonsole, die dann von dem mittleren Abschnitt 120 gebildet wird, relativ leicht verbergen lässt.

### Bezugszeichenliste

- 10: Dachmodul
- 12: Außenschale
- 14, 114: Himmel
- 16: Dachhaut
- 18: Trägerstruktur
- 20, 120: mittlerer Abschnitt von 14
- 22, 122: erster Abschnitt von 14
- 24, 124: zweiter Abschnitt von 14
- 26, 126: Faltlinie
- 28, 128: Faltlinie
- 30, 130: Randbereich
- 32, 132: Randbereich
- 34, 134: Faltlinie
- 40: Karosserieöffnung
- 42: Seitenholm
- 44: B-Säulen-Verkleidung
- 46: B-Säule
- 48: Sonnenblende
- 50: Beleuchtung
- 150: Bedienkonsole
- 152: Element

## Patentansprüche

1. Dachmodul für ein Fahrzeug, welches von oben in einer Fahrzeugkarosserieöffnung montierbar ist und eine Außenschale (12) und einen Himmel (14, 114) aufweist, der einen ersten Abschnitt (22, 122), einen zweiten Abschnitt (24, 124) und einen zwischen dem ersten und dem zweiten Abschnitt liegenden mittleren Abschnitt (20, 120) umfasst, wobei der mittlere Abschnitt fest an der Unterseite der Außenschale angebracht ist, wobei der erste und der zweite Abschnitt jeweils einen zentralen Bereich und beiderseits des zentralen Bereichs jeweils einen Randbereich (30, 32, 130, 132) umfassen, der bezüglich des zentralen Bereichs nach unten klappbar ist, und wobei der erste und der zweite Abschnitt für den Durchtritt durch die Karosserieöffriung bezüglich des mittleren Abschnitts nach unten klappbar sind.

2. Dachmodul gemäß Anspruch 1, **dadurch gekennzeichnet, dass** der erste Abschnitt (22), in Fahrzeuglängsrichtung gesehen, vor dem mittleren Abschnitt (20) und der zweite Abschnitt (24) hinter dem mittleren Abschnitt angeordnet ist.

3. Dachmodul gemäß Anspruch 1, **dadurch gekennzeichnet, dass** der erste Abschnitt (122), in Fahrzeuglängsrichtung gesehen, auf der linken Seite des mittleren Abschnitts (120) und der zweite Abschnitt (124) auf der rechten Seite des mittleren Abschnitts angeordnet ist.

4. Dachmodul gemäß einem der vorhergehenden Ansprüche, **dadurch gekennzeichnet, dass** der mittlere Abschnitt (20, 120) streifenartig ausgebildet ist.

5. Dachmodul gemäß einem der vorhergehenden Ansprüche , **dadurch gekennzeichnet, dass** die Fläche des ersten Abschnitts (22, 122) und des zweiten Abschnitts (24, 124) jeweils größer als die Fläche des mittleren Abschnitts (20, 120) ist.

6. Dachmodul gemäß einem der vorhergehenden Ansprüche, **dadurch gekennzeichnet, dass** der erste Abschnitt (22, 122) und der zweite Abschnitt (24, 124) vollständig unterhalb der Außenschale (12) angeordnet sind.

7. Dachmodul gemäß einem der vorhergehenden Ansprüche, **dadurch gekennzeichnet, dass** der Randbereich des mittleren Abschnitts (20, 120) bezüglich des ersten Abschnitts (22, 122) und des zweiten Abschnitts (24, 124) ausgespart ist.

8. Dachmodul gemäß Anspruch 7, **dadurch gekennzeichnet, dass** die Aussparungen des mittleren Abschnitts (20, 120) so bemessen sind, dass der Rand des mittleren Abschnitts jeweils die Verlängerung der Faltlinie (34, 134) zwischen dem jeweiligen Randbereich (30, 32, 130, 132) und dem zentralen Bereich des ersten (22, 122) bzw. des zweiten Abschnitts (24, 124) bildet.

9. Dachmodul gemäß einem der Ansprüche 1 bis 6, **dadurch gekennzeichnet, dass** der mittlere Abschnitt (20) beiderseits jeweils einen Randbereich umfasst, der bezüglich des zentralen Bereichs des mittleren Abschnitts nach unten klappbar ist und von dem entsprechenden Randbereich (30, 32) des ersten Abschnitts (22) und des zweiten Abschnitts (24) getrennt ist.

10. Dachmodul gemäß einem der vorhergehenden Ansprüche, **dadurch gekennzeichnet, dass** alle Faltlinien (26, 28, 34, 126, 128, 134) durch Einschnitte in das Himmelmaterial vorgegeben sind.

11. Dachmodul gemäß einem der vorhergehenden Ansprüche, **dadurch gekennzeichnet, dass** der Himmel (14, 114) aus PU-RIM, PET oder Glasutech gefertigt ist.

12. Dachmodul gemäß Anspruch 7 oder 8, sofern auf Anspruch 2 rückbezogen, **dadurch gekennzeichnet, dass** das Dachmodul (10) für einen Pkw vorgesehen ist und die Abmessung des mittleren Abschnitts (20) in Dachlängsrichtung der entsprechenden Abmessung der B-Säule (46) entspricht, wobei nach der Montage des Dachmoduls die Aussparungen des mittleren Abschnitts (20) von einer verlängerten B-Säulen-Verkleidung (46) abgedeckt sind.

13. Dachmodul gemäß Anspruch 7 oder 8, sofern auf Anspruch 3 rückbezogen, **dadurch gekennzeichnet, dass** das Dachmodul (10) für einen Pkw vorgesehen ist und die Abmessung des mittleren Abschnitts (120) in Dachquerrichtung der entsprechenden Abmessung einer vorderen Bedienkonsole (150) für ein öffnungsfähiges Dachsystem und/oder für eine Innenraumbeleuchtung entspricht, wobei nach der Montage des Dachmoduls die vordere Aussparung des mittleren Abschnitts (120) von der Bedienkonsole abgedeckt ist.

14. Dachmodul gemäß Anspruch 7 oder 8, sofern auf Anspruch 3 rückbezogen, **dadurch gekennzeichnet, dass** das Dachmodul (10) für einen Pkw vorgesehen ist und die Abmessung des mittleren Abschnitts (120) in Dachquerrichtung der entsprechenden Abmessung eines hinteren Elements (152) entspricht, das eine Zusatzbremsleuchte und/oder eine Innenraumbeleuchtung umfasst, wobei nach der Montage des Dachmoduls die hintere Aussparung des mittleren Abschnitts von dem hinteren Element abgedeckt ist.

15. Dachmodul gemäß einem der vorhergehenden Ansprüche, **dadurch gekennzeichnet, dass** die Außenschale (12) eine Dachhaut (16) umfasst, die mit einer Trägerstruktur (18) hinterpresst ist.

16. Dachmodul gemäß Anspruch 15, **dadurch gekennzeichnet, dass** die Dachhaut (16) als Aluminiumblech, coil-coated-Stahlblech oder Kunststofffolie ausgebildet ist.

17. Dachmodul gemäß Anspruch 15 oder 16, **dadurch gekennzeichnet, dass** die Trägerstruktur (18) als Leichtbau-Wabenstruktur mit Papier, Metall oder Kunststoff als Kernmaterial ausgebildet ist.

18. Dachmodul gemäß Anspruch 17, **dadurch gekennzeichnet, dass** die Trägerstruktur (18) als PHC (paper honeycomb)-Struktur ausgebildet ist.

19. Dachmodul gemäß Anspruch 18, **dadurch gekennzeichnet, dass** die Wabenstruktur beiderseits von einer mit Polyurethan getränkten Glasfasermatte umgeben ist.
